# EUROPEAN PATENT APPLICATION

(11) **EP 4 696 666 A1**
(43) Date of publication of application: **18.02.2026**
(21) Application number: 24792880.7
(22) Date of filing: 27.03.2024
(51) Int. Cl.: C03C 3/066, C03C 3/068, C03B 1/02, C08K 3/40, C08L 101/00, C08L 23/12, C08L 23/16, C08L 25/08, C08L 69/00

(54) **ANTIMICROBIAL GLASS COMPOSITION, METHOD FOR PREPARING ANTIMICROBIAL GLASS POWDER THEREFROM, AND HOME APPLIANCE COMPRISING SAME**

(30) Priority: 17.04.2023 KR 20230050223
(71) Applicant: LG Electronics Inc., Yeongdeungpo-gu Seoul 07336 (KR)
(72) Inventor: KIM, Daesung, Seoul 08592 (KR); KIM, Namjin, Seoul 08592 (KR); KANG, Dongwon, Seoul 08592 (KR); KIM, Young Seok, Seoul 08592 (KR); CHOI, Wongyu, Seoul 08592 (KR)
(74) Representative: Sonnenhauser, Thomas Martin
(86) International application number: PCT/KR2024/003841
(87) International publication number: WO 2024/219693

(57) **Abstract**

Disclosed are an antibacterial glass composition, a method for preparing antimicrobial glass powder therefrom, and a home appliance comprising same, wherein the antibacterial glass composition has Zn ions, which are eluted for antibacterial function, controlled to induce network formation, by using the content ratio of network-forming oxides to modifier oxides, thereby securing antibacterial capacity and water resistance simultaneously and preventing oxidation due to alkaline oxides. As a result, the antibacterial glass composition according to the present invention comes to be an antibacterial agent that can prevent oxidation due to alkaline oxides while exhibiting the characteristics of a non-elutable material, thereby exerting the effects of preventing contamination from bacteria, mold, etc. and an excellent durability when used as a coating agent for components that come into contact with drinking water.

## Description

### BACKGROUND

### [Technical Field]

The present invention relates to an antibacterial glass composition and a method of manufacturing antimicrobial glass powder therefrom, and a home appliance including the same.

### [Description of the Related Art]

Microorganisms such as germs, fungi, and bacteria are ubiquitous in our living spaces, such as a water purifier, a refrigerator, an oven, a washing machine, etc. When the microorganisms enter the human body, they can cause life-threatening infections. Accordingly, an antibacterial glass composition capable of controlling the spread of microorganisms in home appliances such as a water purifier, a refrigerator, an oven, a washing machine, and the like is required.

In these home appliances, bacteria and molds can grow in components formed of plastic injection molded materials and exposed to moisture, causing problems with their exteriors and a user environment.

The bacteria that inhabit home appliances are extremely diverse, and the primary strains can vary depending on the part, but the components exposed to moisture are generally more likely to harbor Pseudomonas aeruginosa.

Accordingly, antibacterial agents need antibacterial performance against these strains. In addition, the antibacterial agents need to be carefully selected from materials with low toxicity to humans and the environment and high-temperature resistance.

The antibacterial agents can be mainly classified into inorganic and organic types. The organic antibacterial agents exert excellent antibacterial performance by dissolving antibacterial agents toward the surface with water, thereby exerting antibacterial activity against bacteria, but durability can be reduced when applied to washing machines. In addition, concerns have been recently raised regarding the human and environmental hazards of the materials eluted from organic antibacterial agents. In addition, due to a low decomposition temperature, there is a risk of decomposition during an injection molding process.

The inorganic antibacterial agent has significantly lower elutability than organic agents and offer high-temperature resistance, but can also cause interfacial wetting issues with plastic injection molded products, and the high cost of silver, often used as the antibacterial agent, limits their applications.

Conventional non-elutable antibacterial glass does not imply that the entire glass is non-elutable, and glass formed of a water-insoluble glass matrix and ions or crystalline components eluted for the purpose of imparting antibacterial properties is referred to as non-elutable glass.

Consequently, to exert antibacterial activity, the ions or crystals that exert antibacterial performance need to be eluted. However, conventional elutable antibacterial glass has difficulty exhibiting long-term durability and has limited safety when applied to components that come into contact with drinking water.

In addition, the conventional antibacterial glasses contain alkaline oxides, and the alkali ions eluted from these alkaline oxides gain electrons. Accordingly, products using the conventional antibacterial glasses can be damaged by oxidation reactions that result in electron loss. Since plastic injection molded products are critically susceptible to oxidation, the oxidation reactions can degrade mechanical properties and, in extreme cases, lead to synthesis failure.

In addition, the alkaline ions capture OH groups, creating a weak haze. Accordingly, the conventional antibacterial glasses have a high risk of crystallization, making it difficult to maintain transparency.

### [SUMMARY OF THE INVENTION]

The present invention is directed to providing an antibacterial glass composition and a method for preparing antimicrobial glass powder, which exerts antibacterial action that permanently continues even in water without any reaction with water, unlike conventional elution mechanisms, and a home appliance including the same.

In addition, the present invention is directed to providing an antibacterial glass composition and a method for preparing antimicrobial glass powder, in which each component of the glass composition and a compositional ratio thereof are strictly controlled such that Zn ions, which are components exhibiting antibacterial performance, participate in a network-forming structure to form a robust glass structure that is not eluted into water, thereby controlling the surface charge of the glass to exert antibacterial properties without elution in water, and a home appliance including the same.

In addition, the present invention is directed to providing an antibacterial glass composition and a method for preparing antimicrobial glass powder, which exhibit non-elutable characteristics by strictly controlling each component of the glass composition and a compositional ratio thereof, and which, when used as a coating material for components that come into contact with drinking water, can exhibit excellent effects in preventing contamination by bacteria, fungi, and the like, and a home appliance including the same.

In addition, the present invention is directed to providing a novel antibacterial glass composition and a method for preparing antimicrobial glass powder, which can suppress unintended oxidation reactions while providing transparent glass, and a home appliance including the same.

Objects of the present invention are not limited to the above objects, and other objects and advantages of the present invention that are not described can be understood by the following description and will be more clearly understood by embodiments of the present invention. In addition, it will be able to be easily seen that the objects and advantages of the present invention may be achieved by devices and combinations thereof that are described in the claims.

An antibacterial glass composition and a method for preparing antimicrobial glass powder, and a home appliance including the same according to the present invention propose a novel composition ratio that excludes alkali oxides, thereby simultaneously ensuring antibacterial activity, water resistance, and oxidation resistance.

In addition, an antibacterial glass composition and a method for preparing an antimicrobial glass powder, and the home appliances including the same according to the present invention involves metal ions within the glass rendering the surface charge of the glass-i.e., the zeta potential-positively charged, attracting bacteria, which generally carry a negative charge and creating a charged environment in which bacterial cannot grow, thereby killing bacterial.

As a result, the antibacterial glass composition according to the present invention is an antibacterial agent exhibiting non-elutable characteristics and thus exerts excellent effectiveness in preventing contamination by bacteria, fungi, and the like when used as a coating material for components that come into contact with drinking water.

In addition, the antibacterial glass composition according to the present invention can prevent oxidation caused by alkali ions and still exhibit excellent antibacterial activity and durability by excluding alkali oxides.

To this end, the antibacterial glass composition according to the present invention includes 15 to 32 wt% of SiO₂, 12 to 32 wt% of B₂O₃, 42 to 69 wt% of ZnO, 1 to 10 wt% of one or more of CaO, BaO, and SnO, and 1 to 11 wt% of one or more of Al₂O₃, ZrO₂, CeO₂, TiO₂, and GeO₂ and does not include any alkali oxides.

In addition, the antibacterial glass composition according to the present invention may further include one or more of CuO, Fe₂O₃, MoO₃, Co₃O₄, MnO₂, and Bi₂O₃, and preferably, further include one or more of CuO, Fe₂O₃, MoO₃, Co₃O₄, MnO₂, and Bi₂O₃ in an amount of 0.2 to 4 wt%, and include CaO in an amount of 1 wt% or more.

According to the present invention, by strictly controlling each component of the glass composition and the composition ratio thereof, Zn ions, which are the components exhibiting antibacterial performance, participate in the network-forming structure to form a robust glass structure that is not eluted into water, thereby controlling the surface charge of the glass to exert antibacterial properties without elution in water.

In addition, according to the present invention, since the antibacterial glass composition is a water-insoluble antibacterial agent formed of multipurpose antibacterial components, the antibacterial glass composition can be used permanently when applied as a coating material for glass shelves or as an additive for plastic injection-molded products.

In addition, according to the present invention, since the antibacterial glass composition is the antibacterial agent exhibiting non-elutable characteristics and, when used as a coating on components that come into contact with food or drinking water, can exert excellent effectiveness in preventing contamination by bacteria, fungi, etc.

In particular, according to the present invention, the antimicrobial glass powder with excellent durability can be provided by suppressing unintended oxidation reactions, and at the same time, transparent glass can be provided.

Specific effects of the present invention together with the above effects will be described with a description of the following detailed matters for carrying out the invention.

### [BRIEF DESCRIPTION OF THE DRAWINGS]

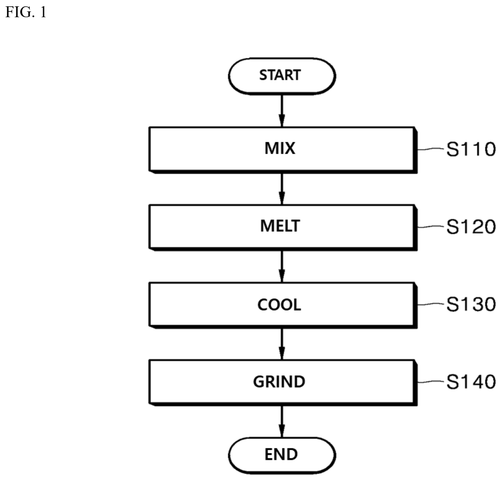

FIG. 1 is a flowchart illustrating a method for preparing antimicrobial glass powder according to an embodiment of the present invention.

### [DETAILED DESCRIPTION OF THE INVENTION]

The above objects, features, and advantages will be described below in detail with reference to the accompanying drawings, and thus those skilled in the art to which the present invention pertains will be able to easily carry out the technical spirit of the present invention. In describing the present invention, when it is determined that a detailed description of the known technology related to the present invention may unnecessarily obscure the gist of the present invention, a detailed description thereof will be omitted. Hereinafter, exemplary embodiments according to the present invention will be described in detail with reference to the accompanying drawings. In the drawings, the same reference numerals are used to denote the same or similar components.

The singular expression used herein includes the plural expression unless the context clearly dictates otherwise. In the application, terms such as "composed of" or "comprising" should not be construed as necessarily including all of the various components or operations described in the specification and should be construed as not including some of the components or some of the operations or further including additional components or operations.

Hereinafter, an antibacterial glass composition and a method for preparing antimicrobial glass powder therefrom, and a home appliance including the same according to some embodiments of the present invention will be described.

### Antibacterial glass composition

Unlike conventional elution mechanisms, an antibacterial glass composition according to an embodiment of the present invention exhibits a persistent antibacterial effect even when the glass is submerged in water without any reaction with water.

To this end, to use intermediate oxides that may serve as modifying oxides or network-forming oxides during glass formation, the antibacterial glass composition according to the embodiment of the present invention controls each component and a composition ratio thereof such that Zn ions, which exhibit antibacterial performance, participate in a network-forming structure to form a robust glass structure that is not eluted into water, thereby controlling the surface charge of the glass to exert antibacterial activity without elution in water.

In this way, the antibacterial glass composition according to the embodiment of the present invention controls the Zn ions to be eluted to form a network using a content ratio of the modifier oxides and the network-forming oxides to implement an antibacterial function properties, thereby simultaneously securing antibacterial activity and water resistance.

In addition, the mechanism by which antibacterial activity is exhibited in the present invention involves metal ions within the glass rendering the surface charge of the glass-, that is, the zeta potential-positively charged, attracting bacteria, which normally carry a negative charge, and creates a charged environment in which bacteria cannot grow, thereby killing the bacteria.

In this case, elements for preparing an antibacterial glass composition with excellent durability may be generally classified into two.

First, there is a glass matrix, which forms a glass structure and determines chemical durability. This performs a similar role to carriers of conventional inorganic antibacterial agents (dispersing antibacterial materials on a surface).

A difference is that conventional carriers immobilize antibacterial ingredients on the surface of inorganic antibacterial agents, but the present invention allows metal materials exhibiting antibacterial properties to exist within the glass matrix in ionic form. In this way, to produce the glass matrix with such excellent durability, not only a content ratio of glass formers such as SiO₂ and B₂O₃is important, but also a combination ratio of alkaline components (mixed alkali effect in glass: the mechanical properties of the glass can change nonlinearly depending on the proportion of alkaline components) is a critical factor.

Second, there is the effect of the metal components within the glass. That is, the metal components are the primary factor in exerting antibacterial performance, and the antibacterial properties vary significantly across components. In addition, durability can vary depending on the ionic and covalent bonding states of the components within the glass matrix, making optimal design of the composition ratio of the antibacterial glass crucial.

In addition, the present invention provides a novel antibacterial maintenance composition that can satisfy both antibacterial activity and water resistance described above while completely excluding alkaline oxides, in order to prevent product durability deterioration due to oxidation reactions caused by alkaline ions eluted from alkaline oxides.

To this end, the antibacterial glass composition according to the present invention includes 15 to 32 wt% of SiO₂, 12 to 32 wt% of B₂O₃, 42 to 69 wt% of ZnO, 1 to 10 wt% of one or more of CaO, BaO, and SnO, and 1 to 11 wt% of one or more of Al₂O₃, ZrO₂, CeO₂, TiO₂, and GeO₂ and does not include any alkali oxides.

Since the antibacterial glass composition according to the embodiment of the present invention is a water-insoluble antibacterial agent formed of multipurpose antibacterial components, the antibacterial glass composition can be used permanently when applied as a coating material for glass shelves or as an additive for plastic injection-molded products.

In addition, the antibacterial glass composition according to the embodiment of the present invention is an antibacterial agent exhibiting non-elutable characteristics and thus exerts excellent effectiveness in preventing contamination by bacteria, fungi, and the like when used as a coating material for components that come into contact with drinking water.

In particular, the antibacterial glass composition according to the embodiment of the present invention can suppress unintended oxidation reactions, thereby providing antimicrobial glass powder with excellent durability.

Hereinafter, the roles and contents of each component of the antibacterial glass composition according to the embodiment of the present invention will be described in detail.

SiO₂ and B₂O₃ are network-forming oxides, which form a skeletal structure of glass and are key components that enable vitrification through covalent bonding.

SiO₂ is a glass-forming agent that enables vitrification and is a key component that serves as a skeletal framework in terms of the structure of glass. When SiO₂ is included in an amount of an appropriate level or more, the viscosity of the glass increases during melting, resulting in reduced workability and yield during the cooling process. In addition, SiO₂ does not directly exert antibacterial activity, but forms fewer OH⁻ groups on the glass surface compared to P₂O₅ that is a representative network-forming oxide, which is favorable for inducing a positive charge on the glass surface through the metal ions within the glass.

Accordingly, SiO₂ is preferably added in a content ratio of 15 to 32 wt% of the total weight of the antibacterial glass composition according to the present invention. When the SiO₂ content is less than 15 wt%, the amount of network-forming oxide becomes insufficient, causing the composition to fall outside a vitrification area, which can lead to opacification or heterogeneity, where transparent and opaque glass coexist. Conversely, when the SiO₂ content exceeds 32 wt%, it is difficult to control the surface charge of the glass to a positive value, which may result in a decrease in antibacterial activity.

B₂O₃ is a representative network-forming oxide and is a key component that, together with SiO₂, enables sufficient vitrification. B₂O₃ having a low melting point is used to lower the eutectic point of the molten material. In addition, B₂O₃ helps to create a homogeneous glass by increasing solubility of rigid components (such as TiO₂) during melting for vitrification. However, when B₂O₃ is added in an amount of a predetermined level or more, it can weaken the bonding structure of the glass, potentially reducing water resistance.

Conventional antibacterial glass compositions control the elution of metal ions exhibiting antibacterial performance by controlling the B₂O₃ content. In the present invention, since alkaline oxides are excluded from the composition to impart antioxidant properties, as will be described below, B₂O₃ becomes a key component for incorporating ZnO into the glass and controlling a structure thereof. B₂O₃ exists in two coordination numbers within the glass: [BO3] and [BO4]. When ZnO is present with B₂O₃, it may form O-Zn-O covalent bonds depending on the coordination number of B₂O₃, and Zn²⁺ ionic bonds also exist in combination. In the present invention, antibacterial properties are achieved through this localized charge of Zn.

To this end, B₂O₃ is preferably added in a content ratio of 12 to 32 wt% of the total weight of the antibacterial glass composition according to the present invention. When B₂O₃ is added in an amount of less than 12 wt%, the glass may fall outside the vitrification range due to insufficient flux, resulting in non-melting. Conversely, when B₂O₃ exceeds 32 wt%, structural issues with B within the network-forming structure can result in reduced durability and water resistance of the glass due to the inherent properties of the element.

ZnO is a component that partially substitutes for network-forming oxides and forms covalent bonds, thereby serving both as a network-forming oxide and as a modifier oxide. In addition, ZnO is a component that significantly contributes to exhibiting antibacterial effects.

As an intermediate oxide, ZnO needs to have a small atomic radius and a high electronegativity, which minimizes the difference with oxygen, to participate in the network-forming structure in glass. The intermediate oxides have larger atomic radii and lower electronegativities than conventional network-forming oxides such as Si, P, and B and thus are difficult to form glass on their own, but may substitute for network-forming oxides in the presence of such oxides and perform their role. ZnO serves solely as a modifier oxide at a predetermined content or less, but forms covalent bonds above the predetermined content, resulting in a dramatic improvement in durability. Here, the predetermined content is determined by the contents of the network-forming oxide and the modifier oxide.

Accordingly, ZnO is preferably added in a content ratio of 42 to 69 wt% of the total weight of the antibacterial glass composition according to the present invention. When ZnO is added in an amount of less than 42 wt%, the absolute amount of the material exhibiting antibacterial activity is insufficient, resulting in insufficient antibacterial activity. Conversely, when ZnO is excessively added, exceeding 69 wt%, ZnO cannot exist in ionic form uniformly within the glass and partially forms crystals, causing the composition to fall outside the vitrification region, thereby leading to opacification and heterogeneity, where transparent and opaque glass coexist.

In the present invention, CaO, BaO, and SnO are used to lower the melting point of the antibacterial glass. As specific amounts of these components are added to the antibacterial glass composition, the viscosity of the antibacterial glass is reduced. Since the antibacterial glass composition of the present invention contains a high content of ZnO and does not contain alkaline oxides, it is important to lower the melting point by adding trace amounts of these components.

The antibacterial glass composition of the present invention includes 1 to 10 wt% of one or more of CaO, BaO, and SnO.

When the contents of the above components are less than 1 wt%, the melting point lowering effect is not fully exerted, resulting in the occurrence of unmolten products. In addition, when the contents of the above components exceed 10 wt%, phase separation into zinc borate and alkaline earth silicate may occur.

Preferably, the present invention may include CaO in an amount of 1 wt% or more within the above content range to achieve a more effective melting point lowering effect.

Conventional antibacterial glass compositions contain alkali oxides. Representative alkali oxides include, for example, Na₂O and K₂O. The alkali oxides are oxides that essentially serve as modifier oxides that form non-crosslinking bonds within the glass. The alkali oxides alone cannot vitrify, but vitrification becomes possible when mixed with network-forming agents such as SiO₂ and B₂O₃ at a predetermined ratio. In addition, incorporating alkali oxides into glass as a single component continuously weakens the durability of the glass within the vitrifiable range. However, when the alkaline oxides are incorporated into glass as two or more components, the durability of the glass can be improved depending on the ratio. This is referred to as the mixed alkali effect.

However, the present invention is characterized by the exclusion of alkaline oxides. Although the alkaline oxides have the advantage of lowering the melting point of glass, the present invention excludes the alkaline oxides to prevent problems caused by the elution of alkaline ions. During the corrosion/dissolution process of glass, the size of H3O+ present in moisture and the alkaline ions are similar, leading to rapid substitution. In particular, alkaline ions are the first to be eluted due to their weak bonds within the glass. These eluted ions have the following two problems. First, since alkaline ions eluted from antibacterial glass gain electrons, products containing antibacterial glass as an additive lose electrons. Accordingly, these products are damaged by the oxidation reaction resulting from electron loss. For example, plastic injection-molded products are susceptible to oxidation, which can lead to deterioration of the mechanical properties of the manufactured product or, in extreme cases, to failure of the synthesis process. Second, trace amounts of eluted alkali ions bind OH on the surface, creating a slight haze. Accordingly, the eluted alkaline ions can reduce the transparency of the glass and, in some cases, may also increase the likelihood of glass crystallization.

The present invention proposes a novel composition system that satisfies all properties, such as antibacterial activity and durability, while excluding alkaline oxides.

The antibacterial glass composition of the present invention also contains 1 to 11 wt% of one or more of Al₂O₃, ZrO₂, CeO₂, TiO₂, and GeO₂. These components assists in its vitrification while enhancing the durability of the antibacterial glass. When the above components are used in amounts less than 1 wt%, the durability of the antibacterial glass is not sufficiently enhanced, thereby preventing its continued use. In addition, when these components are used in amounts exceeding 11 wt%, the alkaline earth components, which are high-temperature melting materials, cannot sufficiently melt, leaving the vitrification area and resulting in the formation of unmolten glass.

Next, the antibacterial glass composition of the present invention may further contain one or more of CuO, Fe₂O₃, MoO₃, Co₃O₄, MnO₂, and Bi₂O₃ to achieve a highly transparent color, and preferably, may contain one or more of CuO, Fe₂O₃, MoO₃, Co₃O₄, MnO₂, and Bi₂O₃ in an amount of 0.4 to 4 wt%. When the content exceeds the above range, colors cannot be implemented or the durability and antibacterial performance of the antibacterial glass can be reduced.

Conventional antibacterial glasses exhibit antibacterial performance through the elution of antibacterial ions, and the antibacterial performance is determined by the design of the skeletal structure and the selection of the antibacterial active substance. This means that, although the amount of elution varies depending on the robustness of the skeletal structure, it is ultimately consumable.

The antibacterial glass composition of the present invention is water-insoluble and does not exhibit antibacterial properties through ion elution. It is difficult to directly correlate the antibacterial activity of each component released upon exposure to water at the ppb level. It can be seen that the antibacterial properties exhibited by itself, without ion elution, are due to the presence of ions within the solid glass due to the ratio of components, and the electron transfer phenomenon, which is caused by surface charge (Zeta Potential) and the formation of reactive oxygen species (ROS).

Injected products, window glass, and the like have a surface charge of about -100 mV. In addition, regardless of being Gram-negative or Gram-positive, the cell membrane surface of bacterial strains exhibit a negative charge. The antibacterial glass composition of the present invention has a surface charge of -10 to +10 mV, and this charge difference promotes the adsorption of bacteria to the antibacterial glass surface. The adsorbed bacterial strains are subjected to a charge disturbance state due to the relatively positive charge of the antibacterial glass, which causes severe stress and weakens the cell membrane.

The bacteria strains produce small amounts of ROS during a basal metabolic process. However, when the ROS generated by the antibacterial glass is added, the ROS concentration rapidly increases due to external factors, causing oxidative stress. This leads to the destruction of cell membranes, DNA, and proteins.

Consequently, the antibacterial glass composition of the present invention exhibits antibacterial properties non-consumptively, as ions are released and do not directly affect the bacteria strains, but rather exhibits the antibacterial effects through charge and oxidative stress. Accordingly, even with minimal or no content of components that typically exhibit strong antibacterial properties, such as Ag, Mn, Ga, Te, La, and Cu, sufficient antibacterial activity can be achieved.

In addition, as described above, it can be seen that the antibacterial glass composition of the present invention does not contain alkaline oxides, thereby exerting excellent antioxidation performance in applied products.

### Method for preparing antimicrobial glass powder

Hereinafter, a method for preparing antimicrobial glass powder according to the embodiment of the present invention will be described with reference to the accompanying drawings.

FIG. 1 is a flowchart illustrating a method for preparing antimicrobial glass powder according to an embodiment of the present invention.

As illustrated in FIG. 1, the method for preparing antimicrobial glass powder according to the embodiment of the present invention includes a mixing operation S110, a melting operation S120, a cooling operation S130, and a grinding operation S140.

### Mixing

In the mixing operation S110, an antibacterial glass composition was prepared by including 15 to 32 wt% of SiO₂, 12 to 32 wt% of B₂O₃, 42 to 69 wt% of ZnO, 1 to 10 wt% of one or more of CaO, BaO, and SnO, and 1 to 11 wt% of one or more of Al₂O₃, ZrO₂, CeO₂, TiO₂, and GeO₂, mixing a composition not including alkali oxides, and stirring the mixture.

The characteristics of the antibacterial glass composition are as described above.

### Melting

In the melting operation S120, the antibacterial glass composition is molten.

In this operation, melting is preferably performed at 1,100 to 1,400 °C for 1 to 60 minutes. When the melting temperature is less than 1,100 °C or the melting time is less than 1 minute, the antibacterial glass composition may not be completely molten, leading to incompatibility of the glass melt. Conversely, when the melting temperature exceeds 1,400 °C or the melting time exceeds 60 minutes, excessive energy and time are required, making the process uneconomical.

### Cooling

In the cooling operation S130, the molten antibacterial glass composition is cooled to room temperature.

In this operation, cooling is preferably performed using an in-furnace cooling method. When air or water cooling is used, internal stress in the antibacterial glass may be severe, potentially leading to cracks, and thus the in-furnace cooling is preferred.

### Grinding

In the grinding operation S140, the cooled antibacterial glass is ground. In this case, any of the widely known ball mills, jet mills, or planetary mills may be used for grinding.

Through this grinding, the antibacterial glass is finely ground to prepare antimicrobial glass powder. The antimicrobial glass powder preferably has an average diameter of 30 µm or less, and a more preferred range ranges from 2 to 12 µm.

Meanwhile, a home appliance according to an embodiment of the present invention includes a resin material and a plastic injection molded product to which the antimicrobial glass powder prepared by the above method has been added. The home appliance used in the present invention may include a water purifier, a washing machine, a stand air conditioner, a system air conditioner, a refrigerator, and the like, but is not limited thereto.

Here, the plastic injection molded product contains 95.0 to 99.0 wt% of the resin material and 1.0 to 5.0 wt% of the antimicrobial glass powder.

When the amount of antimicrobial glass powder added is less than 1.0 wt% of the total weight of the plastic injection molded product, the antibacterial activity against Pseudomonas aeruginosa cannot be sufficient. Conversely, when the amount of antimicrobial glass powder exceeds 5.0 wt% of the total weight of the plastic injection molded product, mechanical properties can potentially deteriorate.

The resin material includes at least one of polypropylene (PP), polycarbonate (PC), ethylene propylene rubber (EPDM), acrylonitrile-butadiene-styrene (ABS), and high-impact polystyrene (HIPS).

In this case, the antimicrobial glass powder is the same as the above antibacterial glass composition.

In addition, the plastic injection molded product may further include functional additives in addition to the antimicrobial glass powder. In this case, the functional additives may include at least one selected from the group consisting of an antioxidant, a foaming agent, an impact modifier, a nucleating agent, and a coupling agent.

Accordingly, the home appliance according to the embodiment of the present invention is applied to the surfaces of components susceptible to bacterial growth and frequently exposed to moisture, thereby providing antibacterial properties that prevent the growth and infestation of various microorganisms.

In addition, the antimicrobial glass powder of the present invention may be used not only as an injection molded product, but also as a coating material for glass shelves and as an additive for paints or powder coatings.

### Example

Hereinafter, the configuration and operation of the present invention will be described in more detail through various exemplary embodiments of the present invention. However, this is suggested as exemplary examples of the present invention and may not be construed as limiting the present invention thereby in any sense.

Since descriptions not provided in this section may be technically inferred by those skilled in the art, the descriptions thereof will be omitted.

### 1. Preparation of antimicrobial glass powder samples

Table 1 shows compositions and composition ratios of the antibacterial glass compositions of examples and comparative examples.

Antibacterial glass compositions having compositions described in the examples and comparative examples were molten in an electric furnace at 1,200 °C and then cooled to a bulk glass form on a stainless steel plate by air cooling. Then, the obtained glass was ground using a dryer grinder (ball mill), and antimicrobial glass powder samples with a D50 particle size of 2 to 12 µm were prepared.

Here, the raw materials for the components CaO and BaO were used as CaCO₃ and BaCO₃, respectively, calculated according to stoichiometry, while the remaining components were the same as those listed in Tables 1 and 2. In addition, vitrification was classified based on whether the glass exhibited a homogeneous glassy appearance or whether opalescence and unmolten material occurred.

**[Table 1]**

| Items | Examples | | | | | Comparative Examples | | | |
|---|---|---|---|---|---|---|---|---|---|
| | 1 | 2 | 3 | 4 | 5 | 1 | 2 | 3 | 4 |
| SiO₂ | 20 | 16.8 | 15.1 | 17.6 | 31.8 | 25.4 | 5 | 20 | 35.7 |
| B₂O₃ | 19.5 | 12.4 | 31.4 | 18.4 | 14.2 | 28.4 | 40 | 20 | 5.8 |
| ZnO | 54.1 | 68.4 | 42.2 | 51.9 | 47.1 | 33.6 | 52 | 55 | 49.8 |
| CaO | 4.5 | 1 | 4.4 | 1.2 | 1.6 | 2.4 | 1.5 | 0 | 0 |
| BaO | 0 | 0 | 2.8 | 0.4 | 0 | 5.4 | 0 | 0 | 1 |
| SnO | 0 | 0 | 1.1 | 0 | 0.2 | 1 | 0.7 | 0 | 0 |
| Al₂O₃ | 1 | 0.7 | 0 | 4.9 | 0 | 0 | 0 | 0 | 3.6 |
| ZrO₂ | 0.2 | 0 | 0.5 | 0 | 0 | 0 | 0 | 0 | 3.6 |
| CeO₂ | 0 | 0.3 | 0 | 3.1 | 0.8 | 0 | 0 | 0 | 0 |
| TiO₂ | 0 | 0 | 0.3 | 0 | 0.8 | 0 | 0 | 5 | 0 |
| GeO₂ | 0 | 0 | 0.3 | 2.1 | 0 | 0 | 0 | 0 | 0 |
| CuO | 0 | 0 | 0 | 0.2 | 1.2 | 0 | 0 | 0 | 0.5 |
| Fe₂O₃ | 0 | 0.1 | 0 | 0.2 | 0.8 | 0 | 0 | 0 | 0 |
| MoO₃ | 0.3 | 0.1 | 0 | 0 | 0 | 0 | 0 | 0 | 0 |
| Co₃O₄ | 0 | 0 | 1.1 | 0 | 0 | 0 | 0 | 0 | 0 |
| MnO₂ | 0.4 | 0.2 | 0 | 0 | 0 | 0 | 0.8 | 0 | 0 |
| Bi₂O₃ | 0 | 0 | 0.8 | 0 | 1.5 | 3.8 | 0 | 0 | 0 |
| Total | 100 | 100 | 100 | 100 | 100 | 100 | 100 | 100 | 100 |

### 2. Evaluation of physical properties of antimicrobial glass powder

Table 2 shows the results of the physical property evaluation for the samples prepared according to the examples and comparative examples.

### 1) Antibacterial activity measurement

For the examples and comparative examples in which the glass was uniformly vitrified, antibacterial activity was evaluated against four bacterial strains (Staphylococcus aureus, escherichia coli, Klebsiella pneumoniae, and Pseudomonas aeruginosa) using the shaking flask method (ASTM E2149-13a).

### 2) Antibacterial activity measurement after durability evaluation

To evaluate the durability of the examples and comparative examples in which the glass was uniformly vitrified, after the samples were exposed to moisture according to the ASTM C1285-14 test method (evaluation of durability of glass and glass ceramics), the above antibacterial activity test was additionally conducted (50 °C, 32 hours).

**<Table 2>**

| Items | | Examples | | | | | Comparative Examples | | | |
|---|---|---|---|---|---|---|---|---|---|---|
| | | 1 | 2 | 3 | 4 | 5 | 1 | 2 | 3 | 4 |
| Vitrification (O, X) | | O | O | O | O | O | O | O | X | X |
| Antibacterial activity | Staphyloc occus aureus | 99.9 % | 99.9 % | 99.9 % | 99.9 % | 99.9 % | 94.6% | 99.9% | - | - |
| | Escherichi a coil | 99.9 % | 99.9 % | 99.9 % | 99.9 % | 99.9 % | 80.6% | 99.9% | - | - |
| | Klebsiella pneumoni ae | 99.9 % | 99.9 % | 99.9 % | 99.9 % | 99.9 % | 74.4% | 99.9% | - | - |
| | Pseudomo nas aeruginosa | 99.9 % | 99.9 % | 99.9 % | 99.9 % | 99.9 % | 43.8% | 99.9% | - | - |
| (After durability evaluation) Antibacterial activity | Staphylococc us aureus | 99.9 % | 99.9 % | 99.9 % | 99.9 % | 99.9 % | 26.8% | 54.4% | - | - |
| | Escherichia coil | 99.9 % | 99.9 % | 99.9 % | 99.9 % | 99.9 % | 32.8% | 57.6% | - | - |
| | Klebsiella pneumoniae Pseudomona s aeruginosa | 99.9 % | 99.9 % | 99.9 % | 99.9 % | 99.9 % | 43.8% | 65.4% | - | - |
| | | 99.9 % | 99.9 % | 99.9 % | 99.9 % | 99.9 % | 11.7% | 32.8% | - | - |

As shown in Table 2, the samples prepared according to Examples 1 to 5 exhibited antibacterial activity of over 99% against all four bacterial strains. In addition, even after exposure to moisture according to the durability evaluation method, the samples prepared according to Examples 1 to 5 still exhibited antibacterial activity exceeding 99%.

On the other hand, for the comparative examples, Comparative Examples 3 and 4 did not achieve uniform vitrification.

In addition, the samples prepared according to Comparative Examples 1 and 2 did not exhibit significant antibacterial activity against any of the four bacterial strains.

Although the present invention has been described above with reference to exemplary drawings, the present invention is not limited by the embodiments and drawings disclosed in the specification, and it is apparent that various modifications can be made by those skilled in the art within the scope of the technical spirit of the present invention. In addition, even when the operational effects according to the configuration of the present invention have not been explicitly described in the description of the embodiments of the present invention, it goes without saying that the effects predictable by the corresponding configuration should be recognized.

## Claims

1. An antibacterial glass composition comprising:
15 to 32 wt% of SiO₂;
12 to 32 wt% of B₂O₃;
42 to 69 wt% of ZnO;
1 to 10 wt% of one or more of CaO, BaO, and SnO; and
1 to 11 wt% of one or more of Al₂O₃, ZrO₂, CeO₂, TiO₂, and GeO₂,
wherein the composition does not include alkaline oxides.

2. The antibacterial glass composition of claim 1, further comprising one or more of CuO, Fe₂O₃, MoO3, Co₃O₄, MnO₂, and Bi₂O₃.

3. The antibacterial glass composition of claim 2, further comprising 0.2 to 4 wt% of one or more of CuO, Fe₂O₃, MoO3, Co₃O₄, MnO₂, and Bi₂O₃.

4. The antibacterial glass composition of claim 1, wherein the CaO is included in an amount of 1 wt% or more.

5. A method for preparing antimicrobial glass powder, comprising:
an operation (a) of forming an antibacterial glass composition by mixing and stirring a composition, which includes 15 to 32 wt% of SiO2, 12 to 32 wt% of B₂O₃, 42 to 69 wt% of ZnO, 1 to 10 wt% of one or more of CaO, BaO, and SnO, and 1 to 11 wt% of one or more of Al₂O₃, ZrO₂, CeO₂, TiO₂, and GeO₂ and does not include alkaline oxides;
an operation (b) of melting the antibacterial glass composition;
an operation (c) of cooling the molten antibacterial glass composition; and
an operation (d) of grinding the cooled antibacterial glass composition.

6. The method of claim 5, wherein in the operation (a),
the antibacterial glass composition further includes one or more of CuO, Fe₂O₃, MoO₃, Co₃O₄, MnO₂, and Bi₂O₃.

7. The method of claim 6, wherein in the operation (a),
the antibacterial glass composition further includes 0.2 to 4 wt% of one or more of CuO, Fe₂O₃, MoO₃, Co₃O₄, MnO₂, and Bi₂O₃.

8. The method of claim 5, wherein the CaO is included in an amount of 1 wt% or more.

9. The method of claim 5, wherein in the operation (b),
the melting is performed at 1,100 to 1,400 °C for 1 to 60 minutes.

10. A home appliance including a plastic injection molded product in which antimicrobial glass powder is added to a resin material,
wherein the plastic injection molded product includes 95.0 to 99.0 wt% of the resin material, and 1.0 to 5.0 wt% of the antimicrobial glass powder, and
the antimicrobial glass powder includes 15 to 32 wt% of SiO₂, 12 to 32 wt% of B₂O₃, 42 to 69 wt% of ZnO, 1 to 10 wt% of one or more of CaO, BaO, and SnO, and 1 to 11 wt% of one or more of Al₂O₃, ZrO₂, CeO₂, TiO₂, and GeO₂ and does not include alkaline oxides.

11. The home appliance of claim 10, wherein the resin material includes at least one of polypropylene (PP), polycarbonate (PC), ethylene propylene rubber (EPDM), acrylonitrile-butadiene-styrene (ABS), and high-impact polystyrene (HIPS).

12. The home appliance of claim 10, wherein the antimicrobial glass powder further includes one or more of CuO, Fe₂O₃, MoO₃, Co₃O₄, MnO₂, and Bi₂O₃.

13. The home appliance of claim 10, wherein the antimicrobial glass powder further includes 0.2 to 4 wt% of one or more of CuO, Fe₂O₃, MoO₃, Co₃O₄, MnO₂, and Bi₂O₃.

14. The home appliance of claim 10, wherein the antimicrobial glass powder includes 1 wt% or more of the CaO.
